Europäisches Patentamt

European Patent Office

Office européen des brevets

(11) Publication number : **0 150 552 B2**

# NEW EUROPEAN PATENT SPECIFICATION

(45) Date of publication of the new patent specification : **23.12.92 Bulletin 92/52**

(51) Int. Cl.⁵ : **G01N 17/00, G01N 17/04**

(21) Application number : **84303370.5**

(22) Date of filing : **17.05.84**

(54) Electrical resistance corrosion probe.

(43) Date of publication of application :
**07.08.85 Bulletin 85/32**

(45) Publication of the grant of the patent :
**18.01.89 Bulletin 89/03**

(45) Mention of the opposition decision :
**23.12.92 Bulletin 92/52**

(84) Designated Contracting States :
**BE DE FR GB IT NL**

(56) References cited :
**GB-A- 2 109 937**
**US-A- 3 108 242**
**US-A- 3 124 771**

(56) References cited :
**US-A- 3 857 094**
**US-A- 3 980 542**
**US-A- 3 996 124**
**US-A- 4 326 164**

(73) Proprietor : **SSL Limited**
**9 Coningsby Road**
**Bretton Peterborough PE3 8SB (GB)**

(72) Inventor : **Grandy, David Brian**
**163 Rolleston Drive**
**New Lenton Nottingham, NG7 1JZ (GB)**

(74) Representative : **Harrison, David Christopher et al**
**MEWBURN ELLIS 2 Cursitor Street**
**London EC4A 1BQ (GB)**

EP 0 150 552 B2

## Description

The present invention relates to electrical resistance corrosion probes.

Probes for the testing of corrosion by assessment of electrical resistance have been known for some time. The commonest type see e.g. GB A 2081904 consists of a stem mounted on the wall of the pipe or vessel the corrosion of which is to be assessed, and projecting into the corrosive medium contained in or flowing in that pipe or vessel. The test element is usually a loop of round wire (see figure 5 of that laid open application) projecting from the end of the stem. The loop is made of the same material as the pipe or vessel. Since it is being subjected to the same corrosive medium as the pipe or vessel, the extent of corrosion of the pipe or the vessel can be assessed by reference to the extent of corrosion of the test loop. This is measured by measuring the variation in resistance of that loop, usually using a bridge circuit. These are means for compensating for temperature variation.

It is a major disadvantage of this type of probe that by their nature they project inwardly from the wall of the vessel or pipe so conditions at the sensing wire may not be the same as those at the wall and particularly in the case of pipelines they have to be withdrawn from the pipe before it can be cleaned or monitored by means of a pig travelling along it. Withdrawal from the pipeline itself is a complex operation.

Furthermore with the probes of this type a large part of the probe stem is itself being exposed to the corrosive medium being tested.

To overcome these disadvantages we provide a flush mounted probe. In this, the sample element is essentially flush with the wall of the vessel or pipe the material of which is being monitored for corrosion. We say essentially flush because it will not normally be precisely flush but slightly recessed behind the level of the wall so that it will not be damaged by the passage of mechanical elements such as a pig.

GB-A-2109937 mentions that it is known to use a sample element which is a thin foil or ribbon mounted with a face thereof exposed. It points out that such known foil elements need to be very thin. The document goes on to describe an arrangement in which a sample element is an elongate strip which is convoluted into a coil (i.e. convoluted face to face) and embedded in an encapsulant with a spiral edge of the elongate strip exposed. This edge is mounted flush with a wall to monitor corrosion of the wall.

US-A-3996124 discloses a probe in which electrodes are positioned flush with a wall. In one form, electrodes embedded in a probe part which is fitted into another part which, in turn, is screwed into a sleeve which is welded to a pipe.

US-A-3108242 describes a corrosion detecting probe comprising a corrodible electrically conductive layer mounted on the surface of an insulating base, which conductive layer is etched to form a conductive path which is substantially longer than the longest physical dimension of the layer itself. The probe is for use in detecting failure of a paint or other material which is applied over it.

According to the present invention there is provided an electrical resistance corrosion probe for mounting in a wall of a material the corrosion of which is to be monitored, the probe having a sample element of that material in the form of a convoluted elongate member having faces which are wider than its edges, the probe being constructed and arranged to mount the convoluted sample element essentially flush with the wall, wherein the elongate member is shaped so as to be convoluted edge to edge with a face of the elongate member essentially providing an overall surface thereof, the sample element is mounted on one face of a non-corrosive insulating support at one end of the probe, the said face of the elongate member is flush with the said face of the insulating support, and the probe is constructed and arranged for mounting the said face of the elongate member essentially flush with a wall of a pipeline of the material the corrosion of which is to be monitored.

The convoluted elongate member of this invention suitably has a length which is many times greater than its width (for example 50-200 times). A preferred conformation for the sample element is a bifilar (two-start) spiral strip displayed on one surface of the support which is preferably a glass ceramic.

To provide for temperature compensation an exactly similar convoluted element may be provided and be supported at or adjacent the opposite face of the insulating support so as to be shielded from the corrosive material but to be responsive to the temperature conditions obtaining.

It is a particularly advantageous feature of the present invention that to avoid irregular corrosion due to stress in the sample material the convoluted sample may be prepared by an etching process from a flat blank, and the same process may be used for the preparation of the reference at the same time and from the same blank, the reference and sample remaining joined by a bridging link of the material.

The sample and reference element borne on the insulating support preferably form a plug at one end of a probe head which is mounted by means of a separate probe body in an aperture in the wall of the pipe or vessel the corrosion of which is to be monitored. The probe head may be essentially a cylindrical sleeve with the insulating support filling one end and its interior filled with a plastics material potting or filling, and at its other end having a connection for electrical leads to the sample and reference. The probe body will also be preferably formed as a cylindrical sleeve the outside of which is engagable in fluid tight engagement with a housing associated with the aperture, and is equipped with electrical connection means leading to electrical equipment which is known as such for following these resistance changes. The body may contain a jack or socket for connection with a socket or jack on the probe head so that when it is desired to change the sample, only the probe head needs replacement.

A particular embodiment of the invention will now be described by reference to the accompanying drawings wherein;

Figure 1 is an approximately diametrical section through the embodiment and through a wall of a pipe to which it is mounted

Figure 2 is an end view on the arrow II of figure 1

Figure 3 is an end view on the arrow III of figure 1

Figure 4 shows a sample and reference after etching and before assembly into the probe head.

A wall 1 is of a material, such as steel, of which the corrosion is required to be monitored. This may be the wall of a vessel or as shown here of a pipeline. It has an aperture 2 formed in it around which is welded by seam 3 a hollow carbon steel boss 4 part of which is internally screw threaded at 5.

An electrical resistance corrosion probe can be mounted in the aperture by means of that boss.

The probe has a body 6 and a head 7.

The body 6 is generally cylindrical having external screw threading at 8 for engagement with the screw threading 5 of the boss 4. At its end which is innermost in use it has internal screw threading 9 which is for engagement by external screw threading on the head 7.

At the outer end of the body there is welded by electron-beam welding a cap 10 through which pass in a fluid tight sealed manner jacks 11 for electrical connection from the probe to the circuitry known as such for following changes in resistance of the sample. The leads 12 pass within the body to a jack 13 which is to engage with a socket 14 at one end of the head 7.

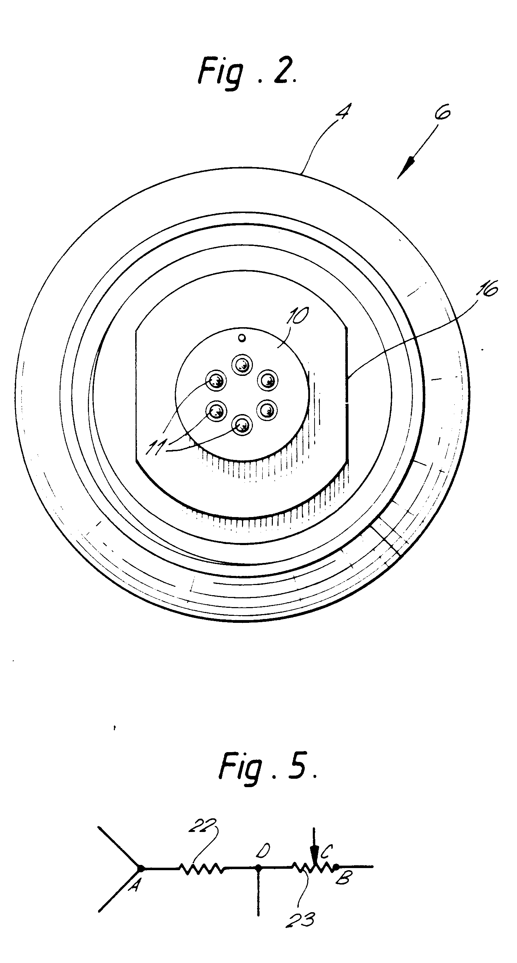

Fluid sealing between the body 6 and the boss 4 is assured by a tapered seal 15 which is compressed between the two as the body is tightened to the boss along the screw threading, using spanner flats 16 (Figure 2) to drive it.

The head 7 is essentially a cylindrical sleeve one end of which has a ledge 20 which positions a support plug 21 formed of a corrosion resistant insulating material such as a glass ceramic. On the flat exposed surface of the glass ceramic there is secured a sample element 22. This is made of the same material as the all under test. Since it is on the face of the plug 21 it is exposed to the same media as the wall is and under he same conditions as that wall. While we refer to our probe as being "flush mounted", it is in fact slightly inset from the line of the wall so that the exposed element would not be damaged by mechanical abrasion whether due to the material being conveyed or by mechanical elements such as pigs which are passed down a pipeline.

In order to give maximum sensitivity to the changes occurring upon corrosion, the element 22 is in the form of a convoluted strip. Its length is many times its width which is many times its thickness. In this way a strip of comparatively high resistance is given which because of its very low thickness (about 0.1 mm) is highly sensitive to changes by corrosion of one face. The convolution of the strip of course increases the length available within a given aperture in a wall or vessel. A preferred conformation is shown in the element 22 namely a bifilar (two start) planar spiral, though other conformations can be envisaged.

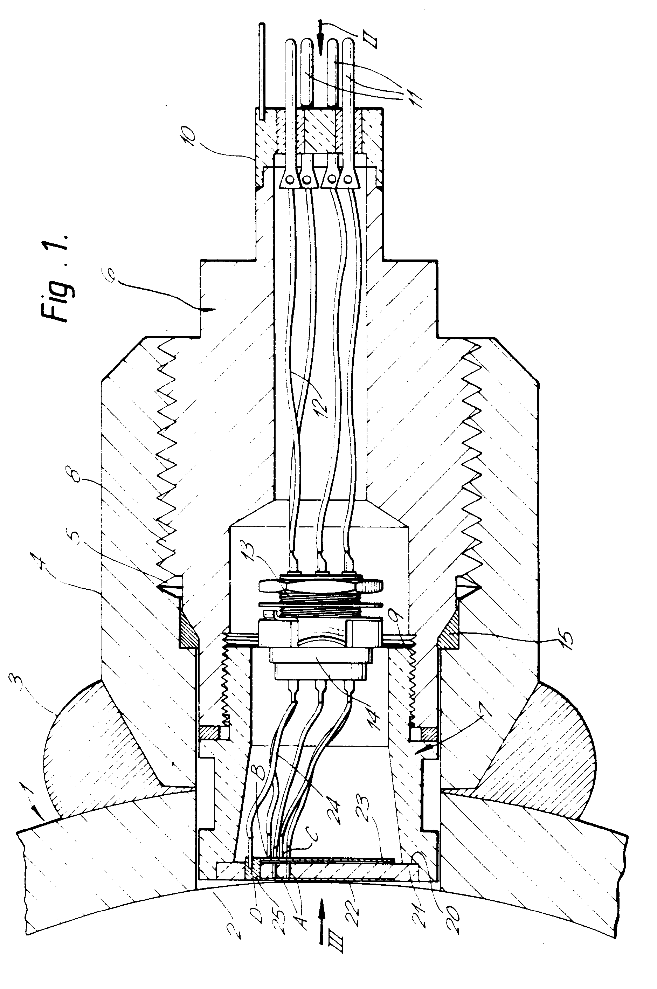

To provide for temperature-change compensation, a reference element as far as possible identical with the sample element is provided secured to the rear face of the disc 21. This can be seen at 23 figure 1.

Leads 24 are taken from the socket 14 to attachments on the sample and reference elements through the body of the head. This is then filled with a plastics material filling ("potting") such as an epoxy resin so that the head becomes a unitary and highly fluid tight entity. The reference element 23 is protected from corrosive action by the plug 21 but is subjected to substantially the same temperature conditions as the sample 22.

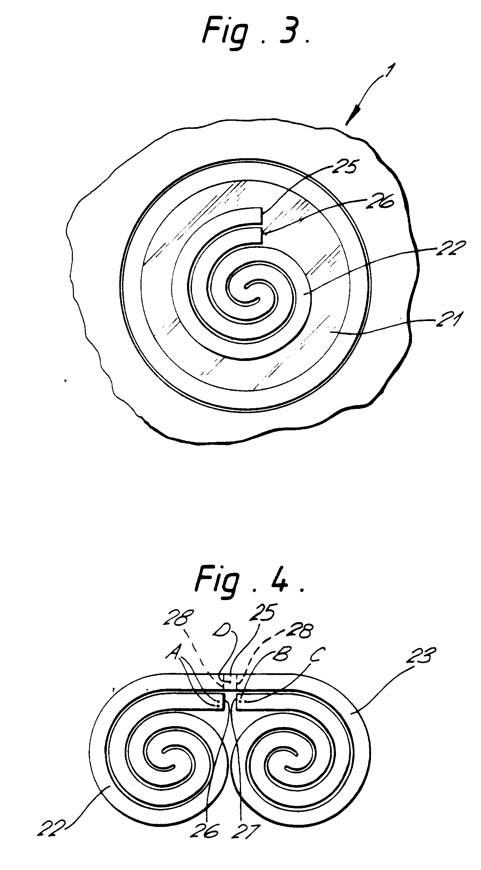

The element and probe head assembly is made by first forming the elements 22 and 23 as a single piece. These are produced by photochemical machining from a blank of the required thickness which may range from 0.1 - 0.2 mm, to give the shape shown in figure 4. The element formed is bent at positions 28 to give the sample element 22 and the reference element 23 joined by a strap 25. To mount the elements in the probe head the element is held in position in the probe head 7 by a jig, and glass ceramic powder is poured into the probe head. The whole assembly is then heated so that the glass ceramic fuses, forming strong bonds with the sides of the probe head and with the sample element. The glass ceramic disc 21 so formed is flush with the end of the probe head and with the exposed surface of the element.

The process such as etching used for making the sample (and reference) element, unlike conventional machining processes, leaves no residual stresses in the finished component which could lead to localised preferential corrosion. The bends 28 between the two elements are embedded within the glass ceramic disc and thus shielded from the process medium.

The electric leads 24 are permanently connected to the strap 25 and to the free ends 26 and 27 respectively of the sample and reference elements at points A-D in the circuit shown in figure 5. In this way comparative readings may be obtained by per se conventional devices of the resistance at any given time of the resistance of the sample and reference elements and the progress of corrosion thus be monitored.

## Claims

1. An electrical resistance corrosion probe for mounting in a wall of a material the corrosion of which is to be monitored, the probe having a sample element (22) of that material in the form of a convoluted elongate member having faces which are wider than its edges, the probe being constructed and arranged to mount the convoluted sample element (22) essentially flush with the wall, wherein the elongate member (22) is shaped so as to be convoluted edge to edge with a face of the elongate member (22) essentially providing an overall surface thereof, the sample element (22) is mounted on one face of a non-corrosive insulating support (21) at one end of the probe, the said face of the elongate member (22) is flush with the said face of the insulating support (21), and the probe is constructed and arranged for mounting the said face of the elongate member (22) essentially flush with a wall (1) of a pipeline of the material the corrosion of which is to be monitored.

2. An electrical resistance corrosion probe according to claim 1, wherein the convolution is a bifilar (two-start) spiral.

3. An electrical resistance corrosion probe according to claim 1 or claim 2, wherein the member (22) is a strip and the length of the strip is at least 50 times its width.

4. An electrical resistance corrosion probe according to any one of claims 1 to 3 wherein the probe has a hollow shell (7) behind the insulating support (21) which hollow shell is filled with a plastics potting material.

5. An electrical resistance corrosion probe according to any preceding claim wherein there is a reference element (23) substantially identical to the sample element (22), the reference element (23) being mounted inside the probe behind the insulating support (21).

6. An electrical resistance corrosion probe according to any one of the preceding claims, wherein a substantially residual stress-free sample element is formed by etching from a blank.

7. An electrical resistance corrosion probe according to claim 6 wherein a reference element substantially identical to the sample element is also formed by the etching process from the same blank.

8. An electrical resistance corrosion probe according to claim 7, wherein the reference (23) and sample elements (22) remain linked by a strap portion (25).

9. An electrical resistance corrosion probe according to any one of the preceding claims, wherein the sample element (22) is permanently borne by a probe head (7), the probe head being separately secured to a probe body (6) and the probe body (6) being separately secured to the wall the corrosion of which is to be monitored.

## Patentansprüche

1. Elektrische Widerstandsmeßeinrichtung für die Korrosionsbestimmung für die Montage in einer Wand eines Materials, dessen Korrosion überwacht werden soll, wobei die Prüfeinrichtung ein Probeelement (22) dieses Materials in der Form eines zusammengerollten, langgestreckten Elements aufweist, dessen Flächen breiter sind als seine Kanten, und die Prüfeinrichtung so ausgebildet und angeordnet ist, daß das zusammengerollte Probeelement (22) im wesentlichen fluchtend bzw. auf gleicher Höhe mit der Wand angeordnet ist, worin das langgestreckte Element (22) so geformt ist, daß es Kante an Kante zusammengerollt ist, sodaß eine Fläche bzw. Stirnfläche des langgestreckten Elementes (22) im wesentlichen eine gesamte Oberfläche desselben bildet, das Probeelement (22) auf einer Seite bzw. Fläche eines korrosionsbeständigen Isolierträgers (21) am einen Ende der Prüfeinrichtung angeordnet ist, die genannte Fläche bzw. Stirnfläche des langgestreckten Elementes (22) mit der genannten Seite bzw. Fläche des Isolierträgers (21) fluchtend bzw. auf gleicher Höhe angeordnet ist und die Prüfeinrichtung so ausgebildet und angeordnet ist, daß die genannte Fläche bzw. Stirnfläche des langgestreckten Elementes (22) im wesentlichen fluchtend bzw. auf gleicher Höhe mit einer Wand (1) einer Rohrleitung aus dem Material angeordnet ist, dessen Korrosion überwacht werden soll.

2. Elektrische Widerstandsmeßeinrichtung für die Korrosionsbestimmung nach Anspruch 1, worin der Umgang der Wicklung eine bifilar gewickelte (zweiadrige) Spirale ist.

3. Elektrische Widerstandsmeßeinrichtung für die Korrosionsbestimmung nach Anspruch 1 oder 2, worin das Element (22) ein Streifen ist und die Länge des Streifens wenigstens das 50-fache seiner Breite beträgt.

4. Elektrische Widerstandsmeßeinrichtung für die Korrosionsbestimmung nach einem der Ansprüche 1 bis 3, worin die Prüfeinrichtung eine hohle Schale (7) hinter dem Isolierträger (21) aufweist, welche hohle Schale mit einem Vergußmaterial aus Kunststoff gefüllt ist.

5. Elektrische Widerstandsmeßeinrichtung für die Korrosionsbestimmung nach einem der vorhergehenden Ansprüche, worin ein im wesentlichen mit dem Probeelement (22) identisches Bezugselement (23) vorgesehen und innerhalb der Prüfeinrichtung hinter dem Isolierträger (21) montiert ist.

6. Elektrische Widerstandsmeßeinrichtung für die Korrosionsbestimmung nach einem der vorhergehenden Ansprüche, worin ein im wesentlichen restspannungsfreies Probeelement durch Ätzen aus einem unbearbeiteten Material hergestellt wird.

7. Elektrische Widerstandsmeßeinrichtung für die Korrosionsbestimmung nach Anspruch 6, worin ein mit dem Probeelement im wesentlichen identisches Bezugselement ebenfalls nach diesem Ätzverfahren aus dem gleichen unbearbeiteten Material hergestellt wird.

8. Elektrische Widerstandsmeßeinrichtung für die Korrosionbestimmung nach Anspruch 7, worin das Bezugselement (23) und Probeelement (22) durch einen Streifchenabschnitt (25) aneinander gebunden bleiben.

9. Elektrische Widerstandsmeßeinrichtung für die Korrosionsbestimmung nach einem der vorhergehenden Ansprüche, worin das Probeelement (22) permanent von einem Prüfkopf (7) getragen wird und der Prüfkopf getrennt an einem Prüfkörper (6) befestigt ist und der Prüfkörper (6) getrennt an der Wand befestigt ist, deren Korrosion überwacht werden soll.

**Revendications**

1. Sonde à résistance électrique pour la mesure de la corrosion à monter dans une paroi en un matériau dont la corrosion doit être surveillée, la sonde ayant un élément échantillon (22) en ce matériau sous la forme d'un organe allongé convoluté ayant des faces qui sont plus larges que ses bords, la sonde étant construite et agencée pour maintenir l'élément échantillon convoluté (22) essentiellement à fleur avec la paroi, dans laquelle l'organe allongé (22) est configuré pour être convoluté bord à bord avec une face de l'organe allongé (22) formant essentiellement sa surface générale, l'élément échantillon (22) étant monté sur une face d'un support isolant non corrosif (21) à une extrémité de la sonde, ladite face de l'organe allongé (22) est à fleur avec ladite face du support isolant (21), et la sonde est construite et agencée pour le montage de ladite face de l'organe allongé (22) essentiellement à fleur avec une paroi (1) d'un pipe-line du matériau dont la corrosion doit être surveillée.

2. Sonde à résistance électrique pour la mesure de la corrosion selon la revendication 1, dans laquelle la convolution est une spirale bifilaire (en deux brins).

3. Sonde à résistance électrique pour la mesure de la corrosion selon la revendication 1 ou la revendication 2, dans laquelle l'organe (22) est une bande et la longueur de cette bande est au moins égale à 50 fois sa largeur.

4. Sonde à résistance électrique pour la mesure de la corrosion selon l'une quelconque des revendications 1 à 3, dans laquelle la sonde a une enveloppe creuse (7) derrière le support isolant (21), laquelle enveloppe creuse est remplie d'une matière plastique de mise en pot.

5. Sonde à résistance électrique pour la mesure de la corrosion selon l'une quelconque des revendications précédentes, dans laquelle il y a un élément de référence (23) sensiblement identique à l'élément échantillon (22), l'élément de référence (23) étant monté à l'intérieur de la sonde derrière le support isolant (21).

6. Sonde à résistance électrique pour la mesure de la corrosion selon l'une quelconque des revendications précédentes, dans laquelle un élément échantillon sensiblement sans effort résiduel est formé par attaque d'une ébauche.

7. Sonde à résistance électrique pour la mesure de la corrosion selon la revendication 6, dans laquelle un élément de référence sensiblement identique à l'élément échantillon est également formé par le procédé d'attaque, de la même ébauche.

8. Sonde à résistance électrique pour la mesure de la corrosion selon la revendication 7, dans laquelle les éléments de référence (23) et échantillon (22) restent liés par une portion de languette (25).

9. Sonde à résistance électrique pour la mesure de la corrosion selon l'une quelconque des revendications précédentes, dans laquelle l'élément échantillon (22) est porté en permanence par une tête de sonde (7), la tête de sonde étant séparément fixée à un corps de sonde (6) et le corps de sonde (6) étant séparément fixé à la paroi dont la corrosion doit être surveillée.

Fig . 1.

Fig . 2.

Fig . 5.

## Fig . 3 .

## Fig . 4 .